(19) Europäisches Patentamt
European Patent Office
Office européen des brevets

(11) EP 3 029 191 A1

(12) **EUROPEAN PATENT APPLICATION**
published in accordance with Art. 153(4) EPC

(43) Date of publication:
**08.06.2016 Bulletin 2016/23**

(21) Application number: **14831905.6**

(22) Date of filing: **26.02.2014**

(51) Int Cl.:
***D04H 1/728*** *(2012.01)* ***D04H 1/4374*** *(2012.01)*
***B01D 39/02*** *(2006.01)*

(86) International application number:
**PCT/KR2014/001571**

(87) International publication number:
**WO 2015/016450 (05.02.2015 Gazette 2015/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.08.2013 KR 20130091656**
**01.08.2013 KR 20130091655**
**01.08.2013 KR 20130091654**

(71) Applicant: **Finetex Ene, Inc.**
**Seoul 137-819 (KR)**

(72) Inventor: **PARK, Jong-Chul**
**Seoul 140-774 (KR)**

(74) Representative: **v. Bezold & Partner Patentanwälte - PartG mbB**
**Akademiestraße 7**
**80799 München (DE)**

(54) **MULTI-LAYERED NANOFIBER FILTER MEDIUM USING ELECTRO-BLOWING, MELT-BLOWING OR ELECTROSPINNING, AND METHOD FOR MANUFACTURING SAME**

(57) The present invention, aimed to enhance low heat-resistant ability of the current filters, relates to multi-layered nanofiber filter media and its manufacturing method, laminating nanofiber using electro-blown and electro-spinning subsequently on a cellulose substrate. In addition, the present invention relates to multi-layered nanofiber filter media and its manufacturing method, laminating nanofiber using melt-blown and electro-spinning subsequently on a cellulose substrate.

[Fig. 1]

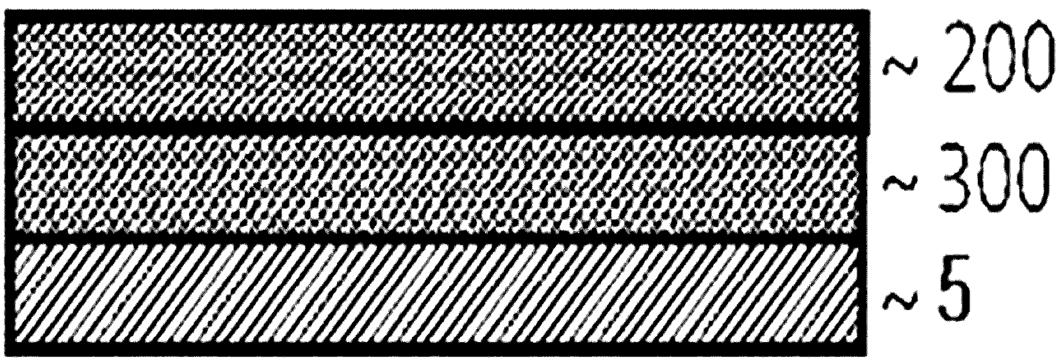


EP 3 029 191 A1

## Description

### Technical Field

The present invention relates to a multi-layered nanofiber having increased heat resistance and its manufacturing method, using electro-blown or melt-blown, and electro-spinning. More particularly, it relates to the multi-layered nanofiber filter media and its manufacturing method by forming the first heat-resistant polymer nanofiber using electro-blown or melt-blown on a substrate, and by electro-spinning the second heat-resistant polymer on the above substrate, thereby having the second heat resistant polymer nanofiber laminated on the substrate.

### Background Art

Generally, a filter is a filtering medium which filters out foreign matter in fluid, and comprises a liquid filter and an air filter. An air filter is used for prevention of defective high-tech products along high-tech industry development. Installation in Clean room which completely eliminates biologically harmful things such as dust in air, particles, bio particles such as virus and mold, bacteria, etc. is more prevalent day by day. Clean room is applied in various fields such as production of semiconductor, assembly of computing device, tape manufacture, seal printing, hospital, medicine production, food processing plant, and food and agriculture field.

Also, gas turbine which is a kind of rotary-internal combustion engine generally used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power.

Since the gas turbine comprises very precise component, periodic planned preventive maintenance is held, and wherein the air filter is used for pretreatment to purify air in the atmosphere which inflows to a compressor.

The air filter adopts air for combustion intake to gas turbine, removes foreign substance in atmosphere such as dust, purifies thoroughly, and provides to the gas turbine. Filter currently used in gas turbine has problems such as it is vulnerable to high temperature and foreign matter is not well eliminated.

Also, the air filter forms porous layer with fine porous structure on the surface of a filter medium, performs function of stop penetrating dust into the medium, and filters. However, particles with larger particle size form Filter Cake on the surface of the filter medium. Also, fine particles go through the first surface layer, gradually accumulate in the filter medium, and block gas hole of the filter. Eventually, particles blocking gas hole of filter and fine particles increase pressure loss of a filter, decline sustainability of a filter, and with conventional filter medium there is difficulty in filtering fine pollutant particles having 1micron or less nanosize.

Meanwhile, conventional air filter provides static electricity to fiber-assembly comprising a filter medium, and measures efficiency according to the principle collecting by electrostatic force. However, the European recent air filter standard classification EN779 revised to eliminate efficiency of filter by static electricity effect in 2012 and revealed that conventional filter actual efficiency decreases 20% or more. In addition, as glass-fiber which is used as conventional heat-resistant filter material causes bad-influence to the environment, Europe and the United States are in the state of restricting glass-fiber use for environmental safety.

Moreover, most micro-fiber conventionally produced uses spinning methods such as melt-spinning, dry-spinning, and wet-spinning. In short, polymer solution is forced-extrusion spinning to fine holes with mechanical force. However, nonwoven fabric manufactured using such method has diameter of approximately 5 ~ 500$\mu$m range, and has difficulty in producing nanofiber 1$\mu$m or less. Therefore, filter comprising fiber with large diameter could filter large polluted particles, but filtering fine polluted particles of nanosize is virtually impossible.

To solve the problems above, various methods have been developed and used for the manufacture of a nano-sized fiber (non-woven fabrics), a method of forming the organic nanofibers include: forming nano-structured material by the block segments, by self-assembly structure, by a polymerization using silica catalyst, by carbonization after melt-spinning, and by electro-spinning of polymer solution or melting material.

The embodiment of nanofiber filter using nanofiber, compared to conventional nanofiber filter having greater diameter, has greater specific surface, more flexibility toward surface functioning groups, and has nano-level pore size is thus more effectively capable of removing harmful particles or gases, etc.

However, the embodiment of nanofiber filter causes high production cost, as well as it is difficult to control various conditions for production, and therefore, filters using nanofiber cannot currently be supplied at comparatively low price. Moreover, filters for gas turbine and furnace, etc., would require heat-resistant property.

In addition, conventional nanofiber-spinning technologies were limited to small-scale production mainly for laboratory and therefore did not have include concepts of division of spinning section into units or blocks, in which case nanofiber with one specific diameter was produced. This resulted in limited air permeability and period of use.

## Disclosure

### Technical Problem

The present invention relates to heat-resistant polymer and electro-blown or melt-blown, and, continually, electrospinning, and thereby aims to multi-layered nanofiber filter media with effective manufacturing process and superior heat-resistance property and a corresponding production method thereof.

### Technical Solution

In order to achieve the objects stated above, the present invention provides multi-layered nanofiber filter comprising: a cellulose substrate; the first heat-resistant polymer nanofiber laminated by electro-blown on the one side of the above-substrate; and the second heat-resistant polymer nanofiber laminated by electro-spinning on the above first heat-resistant polymer nanofiber, using electro-blown and electro-spinning.
Here, the first heat-resistant polymer and the second heat-resistant polymer can be equal to each other, each of which can be selected from the group consisting of polyacrylonitrile, meta-aramid, and poly ether surphone, independently.
Meanwhile, the first heat-resistant polymer can be polyamide or polyacrylonitrile, while the second heat-resistant polymer can be selected from the group consisting of meta-aramid, poly ether surphone, and poly imide.
Also, the present invention provides multi-layered nanofiber filter comprising: a cellulose substrate; the first heat-resistant polymer nanofiber laminated by melt-blown on the one side of the above-substrate; and the second heat-resistant polymer nanofiber laminated by electro-spinning on the above first heat-resistant polymer nanofiber, using melt-blown and electro-spinning.
Here, in the above multi-layered nanofiber filter media using melt-blown and electro-spinning, the above first heat-resistant polymer can be selected from polyamide, polyethylene, and polyethylene terephthalate, whereas the above second heat-resistant polymer, preferably, can be selected from meta-aramid, poly ether surphone, and polyimide.
In addition, the present invention provides methods of production of multi-layered nanofiber filter media using electro-blown and electro-spinning, which include the step of forming the first heat-resistant polymer nanofiber through spinning, on the cellulose substrate, by electro-blowing the first spinning solution which is produced by dissolving the first heat-resistant polymer into organic solvent; the step of forming the second heat-resistant polymer nanofiber through spinning, on the first heat-resistant polymer nanofiber, by electro-blowing the second spinning solution which is produced by dissolving the second heat-resistant polymer into organic solvent.
Here, the first heat-resistant polymer and the second heat-resistant polymer can be equal to each other, each of which can be selected from the group consisting of polyacrylonitrile, meta-aramid, and poly ether surphone, independently.
Meanwhile, the first heat-resistant polymer can be polyamide or polyacrylonitrile, while the second heat-resistant polymer can be selected from the group consisting of meta-aramid, poly ether surphone, and poly imide.
The device of electro-blown and electro-spinning are preferably connected continuously.
In addition, the electro-spinning is preferably carried out by using a bottom-up electro-spinning process.
The present invention provides methods of production of multi-layered nanofiber filter media using melt-blown and electro-spinning, which include the step of forming the first heat-resistant polymer nanofiber through spinning, on the cellulose substrate, by melt-blowing the first spinning solution which is produced by dissolving the first heat-resistant polymer into organic solvent; the step of forming the second heat-resistant polymer nanofiber through spinning, on the first heat-resistant polymer nanofiber, by electro-blowing the second spinning solution which is produced by dissolving the second heat-resistant polymer into organic solvent.
Here, the above first heat-resistant polymer can be selected from polyamide, polyethylene, and polyethylene terephthalate, whereas the above second heat-resistant polymer, preferably, can be selected from meta-aramid, poly ether surphone, and polyimide.
In addition, the electro-spinning is preferably carried out by using a bottom-up electro-spinning process.

### Advantageous Effects

The production method of multi-layered nanofiber filter media according to the present invention, using electro-blown or melt-blown, and continuously electro-spinning, is efficient in terms of both production process and price-competitiveness.
Moreover, the multi-layered nanofiber filter media according to the present invention has greater heat-resistant ability using heat-resistant polymer, thereby becomes useful in application as high-efficiency filter.

## Brief Description of the Drawings

FIG. 1 is a schematic view of the multi-layered nanofiber filter media in accordance with the present invention.

FIG. 2 schematically illustrates a view of an electro-spinning apparatus for producing a multi-layered nanofiber filer media according to the invention.

FIG. 3 schematically shows a view of blocks of electro-spinning apparatus for producing a multi-layered nanofiber filer media according to the invention.

FIG. 4 schematically shows a view of the nozzle and nozzle blocks of electro-spinning apparatus for producing a multi-layered nanofiber filer media according to the invention.

## Description of Reference Numbers of Drawings

| | |
|---|---|
| 1, 1a, 1b: | voltage generator, |
| 2: | nozzle, |
| 3: | nozzle block, |
| 4: | collector, |
| 5: | substrate, |
| 6: | auxiliary belt, |
| 7: | roller for auxiliary belt, |
| 8: | cases, |
| 9: | thickness measuring device, |
| 10: | electro-spinning apparatus, |
| 11: | supply roller, |
| 12: | winding roller, |
| 19: | laminating device, |
| 20, 20a, 20b: | block, |
| 30: | main control device, |
| 41: | overflow solution storage tank, |
| 43: | tube, |
| 44: | spinning solution storage tank, |
| 45: | spinning solution circulation pipe, |
| 200: | electro-spinning nanofiber, |
| 300: | electro-blown nanofiber, |

## Detailed Description of the Preferred Embodiments

A detailed explanation of a preferred embodiment according to the present invention follows below with reference to accompanying drawings. Also, these embodiments do not limit the scope of the present invention and were presented only as an illustration, and various modifications can be made within the scope of technical points.

The present invention provides multi-layered nanofiber filter comprising: a cellulose substrate; the first heat-resistant polymer nanofiber laminated by electro-blown on the one side of the above-substrate; and the second heat-resistant polymer nanofiber laminated by electro-spinning on the above first heat-resistant polymer nanofiber, using electro-blown and electro-spinning.

The present invention uses cellulose base material which is excellent in heat-resistance for a substrate. As the main component of higher plant, cellulose is produced though photosynthesis process, and cotton, hemp, and rayon are of major cellulose fibers. Firstly, cotton has comparatively higher specific gravity, and greater heat-resistant ability and smoke-tolerance, therefore is more stable against heat. Also, it has good moisture-absorption property, and less durable against acid but high durability against alkali. It is generally used as clothing material due to its moisture-absorption ability and high durability, and studies have been conducted to overcome its weakness through functional manufacture process. Flax fibers consist of fiber threads which are pentagonal or hexagonal shaped and have thick outer shell and fine hollowness. In addition, there are other forms of cellulose fibers such as linen, hemp and jute, and their common

feature is that they consist of heat-resistant materials, and, using this property, heat-resistant filter media which can steadily operate in high-temperature environment can be produced.

Also, it is preferred that the first and the second polymer consist of polymer which has melting point of 180°C or higher, since nanofiber layer does not collapse against increasing temperature. For a specific example of this, heat-resistant polymer resin which constitutes heat-resistant polymer ultrafine fiber can be: aromatic polyester such as polyamide, polyimide, polyamide-imide, poly (meta-phenylene isophthalamide), polysulfone, polyether ketone, polyether imide, polyethylene terephthalate, polytrimethylene terephthalate, polyphosphazene such as polytetrafluoroethylene, poly(diphenoxy-phosphazene), poly-bis[2-(2-mthoxyethoxy) phosphazene], polyurethane copolymer including polyurethane and polyetherurethane, and resin which have melting point of 180°C or higher, or which have no melting point, such as cellulose acetate, cellulose acetate buthylate and cellulose acetate propionate. The above resin which has no melting point refers to those which is carbonated without going under melting process, even if the temperature increases at or higher than 180°C. It is preferable that the heat-resistant polymer used in the present invention can be dissolved into organic solvent, for fiber-formation of ultrafine fiber such as electro-spinning.

On the other hand, it is more preferable that the above heat-resistant polymer is meta-aramid, polyacrylonitrile, poly ether sulfone, polyimide, and/or polyamide.

Here, the first heat-resistant polymer and the second heat-resistant polymer can be equal to each other, each of which can be selected from the group consisting of polyacrylonitrile, meta-aramid, and poly ether surphone, independently.

Or, the first heat-resistant polymer and the second heat-resistant polymer can be different from each other, the above first heat-resistant polymer is polyamide and/or poly acrylonitrile, whereas the above second heat-resistant polymer is selected from meta-aramid, poly ether surphone, and polyimide.

More detailed description of the above heat-resistant polymer follows hereinafter.

The above meta-aramid is the first aramid fiber that has high heat-resistant property, and can be worked at 350°C for a comparatively short period of time, or at 210°C in case of continuous period of working time, and if the temperature increases more than those, it is carbonated, not melt of combusted like other fibers. Above all, unlike other products which is print-resist or fireproof process, it does not emit toxic gas or materials, therefore has excellent property as environment-friendly fiber.

Also, since meta-aramid has very stable molecule structure, therefore not only it has high innate strength, but also enhances the strength of fiber because the molecules are easily oriented during the spinning process.

Generally, it is characterized that the specific gravity of meta-aramid is between 1.3 and 1.4, and is preferred that weight-average molecular weight is between 300,000 and 1,000,000. The most preferred weight-average molecular weight is between 300,000 and 500,000. Aromatic polyamide which is meta-oriented is included. Polymer should have fiber-forming molecular weight, and can include polyamide single-polymer, copolymer, or its mixture thereof.

Here, at least 85% of amide(-CONH-) binding is attached directly to the two aromatic rings. The rings may or may not be substituted. Polymers become mata-aramid when the two rings or radicals are meta-oriented to each other along the molecular chain.

Preferably, the copolymer has other diamines, of 10% or less, which is substituted the first diamine used for forming copolymer, or other diacid chloride, of 10% or less, which is substituted the first diacid chloride used for forming copolymer. The preferred meta-aramid is poly(metha-phenylene isophthalamide)(MPD-I) and its copolymers. While one such meta-aramid fibers is Nomex™ aramid fiber available from E. I. du Pont de Nemours and Company, located at Wilmington, Delaware U.S.A., it is available from various channel such as Tejinconex™ available from Tejin Ltd. located at Tokyo, Japan, NewStar™ available from Yantai Spandex Co. Ltd. located in Shandong, China, and Chinfunex™ available from Guangdong charming chemical Co. Ltd. located at Xinhui, Guangdong, China.

In addition, the above polyacrylonitrile resin is copolymer which is produced from the mixture of acrylonitrile and monomer. Commonly used monomer includes vinyl compound such as styrene-butadiene vinylidene chloride. The same acryl fiber includes at least 85% of acrylonitrile, modacryl includes 35~ 85% of acrylonitrile. Other desired properties, such as increased chemical affinity of fiber toward dye, can be acquired in case where other monomer is added.

Further, in case using acrylonitrile copolymer for spinning solution, nozzles are less polluted and electro-spinning property is increased in the production process of ultrafiber by eletro-spinning, and the better mechanical property of matter can be acquired.

Acrylonitrile monomer is preferably used within a range which satisfies the amount of the hydrophobic monomer. In polymerization process, the weight% of acrylonitrile monomer consist of hydrophilic monomer and hydrophobic monomer in ratio of 4:3, and when this value is subtracted from the total weight% and the result is less than 60 weight%, the viscosity is too low for electro-spinning, and even if cross-linking agent is added here, the nozzles becomes polluted and it is difficult to form stable JET for electro-spinning. However, if it more than 99 weight%, the spinning viscosity becomes too high, and even if viscosity-lessening additives are added, the diameter of extra-fine fiber becomes too thick and the productivity becomes too low to accomplish the goal of the present invention.

In the acrylic polymer, the more co-monomer is added, the more cross-linking agent should be added, to ensure

the stability of electro-spinning and prevent decline of mechanical property of nanofiber.

The degree of polymerization is between 1,000 and 1,000,000, and preferably it is between 2,000 and 1,000,000. If the above degree is below 1,000, the efficiency becomes too low because elimination of electrode from current collector is caused as the cycle proceeds, as it is swollen or dissolved into electrolyte. On the other hand, if the above degree exceeds 1,000,000, there would be higher resistance in the negative electrode, and it becomes difficult to work due to increased viscosity of electrode mixture.

For the hydrophobic monomer, it is preferable to use one or more selected from ethylene series such as methyl acrylate, ethyl acrylate, ethyl methacrylate, butyle methacyrlate, vinyl acetate, vinyl pyrrolidone, vinylidene chloride, and vinyl chloride, and their compound or derivatives.

In the present invention, for the above hydrophilic monomer, it is preferable to use one or more selected from ethylene series such as acryl acid, allyl alcohol, meta-allyl alcohol, hydroxyethyl acrylate, hydroxyethy methaacrylate, hydroxypropl acrylate, butanediol acrylate, dimethylaminoethyl acrylate, butenetricarboxylic acid, vinyl sulfonic acid, allyl sulfonic acid, methallyl sulfonic acid, and polyfunctional acid or their derivatives.

As an initiator to produce the above acrylonitrile series polymer, azo compound or sulfate compound can suffice, but it is preferable to use radical initiator which is generally used in oxidation-reduction reaction.

Further, the above polyethersulfone (PES) is a transparent non-crystalline resin.

That is, since polyethersulfone (PES) is amorphous, the degree of property degradation of mass is low, and it rarely changes between 100 and 200°C because of the low temperature-dependence of flexural modulus. Also, creep-resistant property to the degree of 180°C is the most excellent among the thermoplastic resins, and it is resistant to the degree of 150 to 160°C of hydrothermal or steam. Therefore, due to the above properties of polyethersulfone, it is used for optical disks, magnetic disks, electric and electronic fields, hydrothermal field, automobile fields, or heat-resistant paint and varnish materials.

Polyethersulfone has enhanced heat-resistant and heat-dimensional stable property, and is easily dissolved. The molecular weight of polyethersulfone is, as average viscosity molecular weight, in the range between 8,000 and 20,000. If the average viscosity molecular weight is less than 8,000, the strength of figuration material is so weak that it becomes soft, which is not preferable. If it is more than 200,000, the degree of melt flow becomes too low, thereby making it difficult to figurate satisfactory products. More preferably, the viscosity ranges between 400 and 1,200cps(centi Poise). As for solvent, dichloromethane, chloroform, tetrahydrofuran, methanol, ethanol, butanol, toluene, xylene, acetone, ethyl acetate, dimethylformamide, N-methyl-2-pyrrolidinone, dimethylacetamide, and the like could be among the examples, but not limited to these.

On the other hand, the above polyimide produces spinning solution, in which tetrahydrofuran (THF) and dimethylacetamide, (DMAc) are dissolved into solution.

In the present invention, by composing polyamic acid (PAA), thereafter producing polyamic acid dope by dissolving it into tetrahydrofuran and dimethylacetamide mixture solution, thereafter producing polyamic nanofiber though electro-spinning, and through imidization after, polyimide(PI) nanofiber can be produced.

The above polyimide is produced by two-step reaction.

The first step is the production of polyamic acid, and it is processed by adding dianhydride into diamine-dissolved reaction solution, and to enhance the degree of polymerization, control of water content and purity of monomer are required. As for the solution used in this step is, usually, organic polar solvent such as dimethylacetamide (DMAc), dimethylformamide (DMF) and N- methyl-2-pyrrolidone (NMP). As for the above anhydride, at least one can be used selected from: pyromellyrtic dianhydride (PMDA), benzophenonetetracarboxylicdianhydride (BTDA), 4,4'-oxydiphthalic anhydride (ODPA), biphenyltetracarboxylic dianhydride (BPDA), and bis (3,4-dicarboxyphenyl) dimethylsilane dianhydride (SIDA). Also, as for the diamine above, at least one can be used selected from: 4,4'-oxydianiline (ODA), p-penylene diamine (p-PDA), and o-penylenediamine (o-PDA).

**[Scheme 1]**

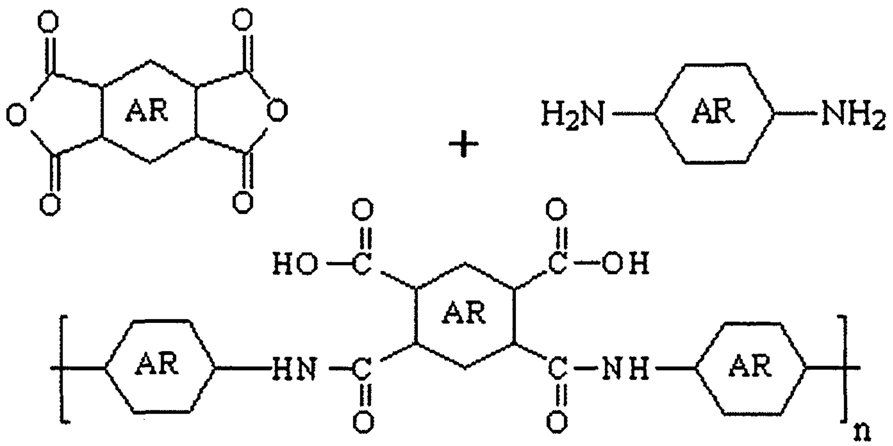

The second step is dehydration and ring closure reaction which produces polyimide from polyamic acid, and the following four steps are most common.

Re-precipitation is a method to obtain polyamic acid in solid form by putting polyamic acid solution into excess poor solvent, and water is generally used as for re-precipitation solvent, but toluene or ether is also used as co-solvent.

Chemical imidization is a method to conduct chemical imidization reaction using dehydration catalyst such as acetic anhydride/pyridine, and is useful for the production of polyimide film.

Thermal imidization is a method of thermally imidizing by heating polyamic acid solution to the degree of 150 to 200°C, and is the most simplistic method but has shortcomings such as high degree of crystallinity and disassemble of copolymer due to the amine exchange reaction when amine-series solution.

The isocyanate method uses diisocyanate, instead of diamine, as monomer, and is a method whereby $CO_2$ gas is produced when heating monomer mixture to the degree of higher than 120°C thus polyimide is produced.

[Scheme 2]

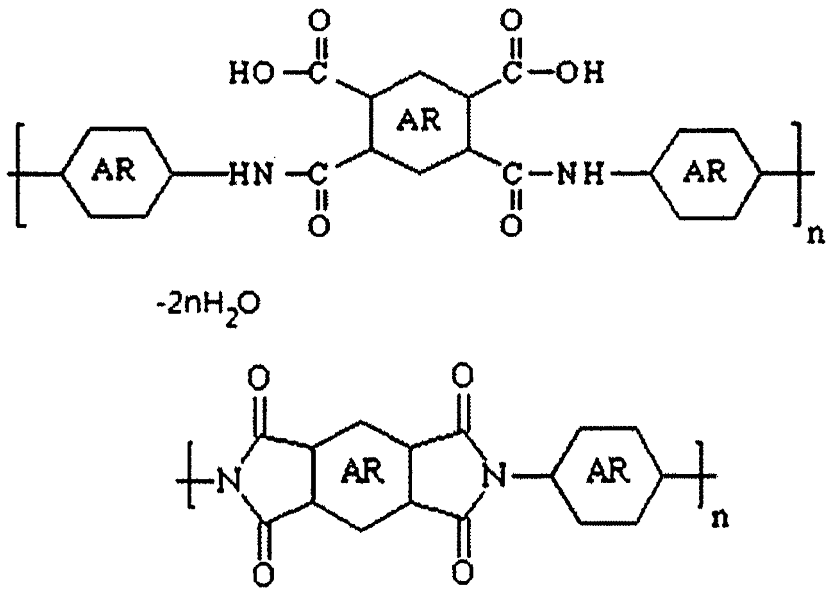


Also, the above polyamide is selected from the group consisting of polyamide 6, polyamide 66 and polyamide 46, and is separated into aromatic and aliphatic polyamide; among the typical aliphatic polyamide is Nylon. Nylon is originally the trademark of Dupont, U.S., but now is used as a generic name. Representative of nylon is nylon 6, nylon 66, and nylon 46.

First of all, nylon 6 has excellent heat-resistant property, moldability, and chemical resistant property, and is produced by ring-opening polymerization of caprolactam. Nylon 6 is so called because its carbon number is six.

Nylon 66 has excellent heat- and wear- resistant property and self-exitinguishability, and generally shares similar characteristics of Nylon 6. Nylon 66 is produced by dehydration-condensation polymerization of hexamethylenediamine and adipic acid.

Nylon 64 is produced by polycondensation of tetramethylenediamine and adipic acid. Diaminobutane (DAB), the raw material, is produced by the reaction of acrylonitrile and hydrogen cyanide, and, during the first step of the manipulation of polymerization, salt is produced from diaminobutane and adipic acid, thereafter it is converted into prepolymer by polymerization process under the appropriate pressure, and by processing this solid form of prepolymer at 250°C nylon 46 is produced as the result of polymerization at high temperature.

On the other hand, the producing method of multi-layered nanofiber filter media using electro-blown and electro-spinning of the present invention includes the step of forming the first heat-resistant polymer nanofiber through spinning, on the cellulose substrate, by electro-blowing the first spinning solution which is produced by dissolving the first heat-resistant polymer into organic solvent; the step of forming the second heat-resistant polymer nanofiber through spinning, on the first heat-resistant polymer nanofiber, by electro-blowing the second spinning solution which is produced by dissolving the second heat-resistant polymer into organic solvent.

Here, the first heat-resistant polymer and the second heat-resistant polymer can be equal to each other, each of which can be selected from the group consisting of polyacrylonitrile, meta-aramid, and poly ether surphone, independently.

Or, the first heat-resistant polymer and the second heat-resistant polymer can be different from each other, the above first heat-resistant polymer is polyamide and/or poly acrylonitrile, whereas the above second heat-resistant polymer is selected from meta-aramid, poly ether surphone, and polyimide.

A detailed description of the cellulose substrate and the heat-resistant polymer is the same as described above.

Hereinafter, the detailed description of electro-blown apparatus and electro-spinning device of the present invention follows.

For the electro-blown apparatus of the present invention, both thermoplastic and thermosetting resin can be used, and heating of the solution is not necessary, and the above apparatus is nanofiber-producing device in which the embodiment of insulation method is comparatively easy.

The method of electro-blown consists of transferring of spinning solution which is dissolved into aforementioned solvent into spinning nozzles, spraying compressed air toward the above spinning nozzles while discharging the above spinning solution through high-voltage-impressed spinning nozzles, and spinning toward grounded section collector downward.

Specifically, it consists of spinning nozzles through which polymer solution transferred from storage tank for spinning solution, the air-spraying hole through which compressed air is sprayed downward of the above spinning nozzles, the voltage-impressing means to impress high voltage onto the above spinning nozzles, and grounding collector to gather spinned fibers in the form of web which is sprayed from the above spinning nozzles.

By spraying compressed air of spinning nozzle, nozzle contamination can be minimized through the suction by collector.

The electro-blown and electro-spinning apparatus of the present invention are connected to each other thereby nanofibers can be continuously laminated.

FIG 2 schematically shows electro-spinning apparatus.

As shown in FIG 2, the electro-spinning apparatus (10) of the present invention is structured to include the main tank(not shown) which stores spinning solution, the measuring pump(number not shown) to appropriately supply the spinning solution stored in the above main tank, the nozzle blocks(3) in which multiple pin-structure nozzles(2) are arranged, the collector(4) which is located the downward part of the above nozzles and distanced from the nozzles(2) to collect the polymer spinning solution, the blocks(20) which accommodate voltage-generating device, the case(8) which consists electric conductor or insulator in the blocks(20).

There is one sole main storage tank(not shown) in the present invention, but in case where the spinning solution consists of more than two kinds, it is possible to prepare more than two main storage tanks or to make partition inside the main storage tank and different kinds of spinning solution is stored therein and supplied respectively.

Here, the present invention uses bottom-up electro-spinning method, in which the above electro-spinning apparatus(10) sprays the solution in the upward direction.

Oh the other hand, in the embodiment of the present invention uses bottom-up electro-spinning apparatus but top-down way can be used, or both bottom-up and top-down methods also can be used altogether.

By the structure described above, the spinning solution which is stored in the main tank is continuously supplied into the multiple nozzles (2) to which high voltage is pressured through metering pump, and the above polymer spinning solution, through the nozzles (2), is spun and collected on the high-voltaged collector (13) and forms nanofiber, thereby the above electro-spinning apparatus(10) produces filter by laminating the formed nanofiber above.

The supply roller(11), which supplies a long sheet to which nanofiber spun from each block(20) is laminated, is provided on the front side, and winding roller (12), to take up the sheets on which nanofiber is laminated, is provided

on the rear side of the electro-spinning apparatus(10).

The long sheet above is provided to prevent deflection as well as the transferring of the nanofiber, and, in the present invention, cellulose substrates(5) on which heat-resistant polymer nanofiber is laminated is used for the sheets, and nanofiber is formed because polymer spinning solution is sprayed from the above electro-spinning apparatus and laminated on the above substrates(5).

More specifically, since the electro-blown and electro-spinning devices are connected, the electro-blown nanofiber is laminated on the cellulose substrate and subsequently electrospun nanofiber is laminated.

The cellulose substrate (5) is used in an embodiment of the present invention, but other material such as release paper or non-woven fabric, without limiting to these, also can be used.

That is, one side of the cellulose substrate(5) which is used as a long sheet is taken up by supply roller (11) on the front side of the electro-spinning apparatus(10), and the other side by winding roller(12).

The supply roller(11) is connected to electro-blown apparatus.

Meanwhile, the electro-spinning apparatus of each block is installed in line with towards its proceeding direction(a) in relation to the collectors(4). In addition, auxiliary belts are provided between each collector(4) and the cellulose substrate(5), and, through each auxiliary belt(6), the cellulose substrate(5) on which nanofiber is laminated is transferred in the horizontal direction. That is, the auxiliary belts rotate at transport speed (V) of the cellulose substrate, and have a roller (7) to drive the auxiliary belts. Auxiliary belts (7) are at least two automatic rollers whose friction force is extremely low. Since the auxiliary belts are provided between the collector and cellulose substrate (5), cellulose substrate (5) is smoothly transferred without being attracted to the high voltage collector.

By a structure described above, the spinning solution stored in the main tank of the block of the above electro-spinning apparatus (10) is spun on the above cellulose substrate (5) positioned on the collector (4) through the nozzles (2), and by spinning solution sprayed on the above cellulose substrate (5) being collected, nanofiber is laminated and formed. And, by the rotation of the rollers of the auxiliary belts (7), auxiliary belts are operated thereby the above process is repeatedly operated.

On the other hand, as shown in FIG 4, the nozzle block (3) consists of multiple nozzles (2) positioned in the upward direction from the outlet, pipes (43) in which nozzles (2) are arranged, spinning solution storage tank (44), and spinning solution circulation pipe (45).

First, spinning solution storage tank (44), which is connected to the main tank and stores spinning solution transferred from it, sprays the spinning solution by supplying it to the nozzles (2) through the spinning solution circulation pipe (45) by the measuring pump(not shown). Here, the spinning solution circulation pipe (45) where multiple nozzles (2) are arranged in an array is supplied with the same spinning solution from the spinning solution storage tank (44), but it is also possible that multiple storage tanks of spinning solution are provided, and each of the pipes (43) is supplied with different kinds of spinning solution and sprayed from it.

When sprayed from the outlet of nozzles (2) above, the solutions overflown without being sprayed is stored in the overflow solution storage tank (41). The above overflow solution storage tank (41) is connected to the main storage tank(not shown) and the spinning solution can be reused for spinning.

On the other hand, the main control device (30), as a device which controls the spinning conditions during the overall spinning process, controls the quantity of the spinning solution supplied into the nozzle block (3), the voltage of the voltage generator (1) of each block (20), and transferring speed (V) according to the thickness of the nanofiber and cellulose substrate measured by the thickness measuring device (9).

The thickness measuring device (9) of the present invention is positioned on both the front and rear side of the blocks (20), in a way that the blocks are facing each other and the nanofiber-laminated cellulose substrate (5) is situated inbetween. Because the above thickness measuring device (9) is connected to the main control device (30) which controls the spinning conditions of the electro-spinning apparatus (10), the main control device (30) controls the transferring speed (V) of each block (20), based on the measured value of the thickness of the nanofiber and cellulose substrate. For instance, when the nanofiber's measured positional deviation of thickness is thin in electro-spinning it decreases the transferring speed and controls the thickness. In addition, by increasing the outlet quantity of the nozzle block (3) and controlling the degree of the electric voltage of the voltage generator (1), it is also possible to evenly control the thickness using the above main control device (30).

The above thickness measuring device (9) is equipped with thickness-measuring part which measures, by measuring a pair of longitudinal and transverse wave by using ultrasonic wave, the distance between nanofiber and cellulose substrate (5), and based on this distance, it calculates the thickness of the above nanofiber and cellulose substrate (5). More specifically, by projecting longitudinal and transverse ultrasound wave on the nanofiber-laminated cellulose substrate, measuring each wave's turnaround time, and using a certain formula that includes this value and a temperature constant, it can calculate the subject's thickness.

In the electro-spinning apparatus (10) of the present invention, because it is possible to modify the value of the initial transferring speed (V) if the above positional deviation (P) is above a certain level, or not to modify the value of the initial transferring speed (V) if the above positional deviation is below a certain level, it is possible to simplify the

control of transferring speed (V) by the transferring speed (V) controlling device. Other than transferring speed (V), it is also possible to control the strength of voltage and outlet quantity of the nozzle block (3), and therefore, if the above positional deviation is below a certain level the strength of voltage and outlet quantity of the nozzle block (3) is not modified, but if the above positional deviation is above a certain level the strength of voltage and outlet quantity of the nozzle block (3) is then modified, thereby making it possible to simplify the control of the strength of voltage and outlet quantity of the nozzle block (3).

In the present invention each block (20) sprays the same polymer spinning solution, but each block (20) can spray different kind of spinning solution, while it is also possible for a block sprays more than two kinds of spinning solution. In case where each block (20) is supplied and sprays at least two kinds of different spinning solution, it is possible for different kinds of polymer nanofiber to be subsequently laminated.

On the rear side of the electro-spinning apparatus (10) of the present invention, laminating device (19) is equipped. The above laminating device (19) supplies heat and pressure, and through this the nanofiber filter, that is, nanofiber-laminated cellulose substrate, is taken up by winding roller and forms nanofiber.

Hereinafter, the method for producing multi-layer nanofiber filter media using subsequently the above electro-blown and electro-spinning device is described.

First, the first heat-resistant polymer is dissolved in an organic solvent and the polymer solution is stored in a storage device of the electro-blown spinning solution to the first supply arranged in the spinneret the solution be discharged. The above first spinning solution is then charged with high voltage and spins on the collector the first heat-resistant polymer nanofiber.

The first heat-resistant nanofiber is transferred to the connected electro-spinning apparatus (10).

The second heat-resistant polymer is dissolved into organic solution, and is supplied into the main storage tank of electro-spinning apparatus (10), and then subsequently supplied into the nozzles (2) of the nozzle blocks (3) which are high-voltaged. The above second spinning solution which is supplied from the above nozzles(2) is collected and focused on the high-voltaged collector(4), and forms the second heat-resistant polymer nanofiber, by being sprayed onto the cellulose substrate to which the first heat-resistant polymer nanofiber is laminated.

Here, the first and the second heat-resistant polymer nanofiber-laminated cellulose substrate is transferred, by the supply roller(11) motivated by a motor(not shown) and the auxiliary belts(6) motivated by the spinning of the above roller(11) into the blocks located in rear side by the spinning of the auxiliary belts (6), and forms nanofiber as the process repeats.

The first heat-resistant polymer and the second heat-resistant polymer can be equal to each other, each of which can be selected from the group consisting of polyacrylonitrile, meta-aramid, and poly ether surphone, independently.

Or, the first heat-resistant polymer and the second heat-resistant polymer can be different from each other, the above first heat-resistant polymer is polyamide and/or poly acrylonitrile, whereas the above second heat-resistant polymer is selected from meta-aramid, poly ether surphone, and polyimide.

A detailed description of the cellulose substrate and the heat-resistant polymer is the same as described above.

The above organic solution is capable of dissolve polymers, and it is not strictly restricted if it is applicable to electro-spinning, and since the organic solution is eliminated during the electro-spinning process, those which affect the feature of a battery. For example, propylene carbonate, butylene carbonate, lactones 1,4 -butyrolactone, diethyl carbonate, dimethyl carbonate, 1,2-dimethyl-2-imidazolidinone, dimethyl sulfoxide , ethylene carbonate, ethylmethyl carbonate, N, N-dimethylformamide, N, N-dimethylacetamide, N-methyl-2-pyrrolidone, polyethylene sulfolane, tetraethylene glycol dimethyl ether, acetone, alcohol or their The mixture can be used to select any one or more of, dimethylformamide (DMF), dimethylacetamide (DMAc) and the like is preferably used.

Each of the emission voltage applied to the electro-blown and electrospinning devices is 1kV or higher, preferably greater than 15kV.

On the other hand, when spinning the heat-resistant polymer, it is most preferred that the temperature is between 30°C and 40°C, inclusive, the humidity between 40 ~ 70%, inclusive, and it depends on the polymer materials.

The diameter of the nanofibers to form a multi-layer filter media in the present invention is preferably from 30 to 2000nm, and more preferably from 50 to 1500 nm.

The present invention provides multi-layered nanofiber filter comprising: a cellulose substrate; the first heat-resistant polymer nanofiber laminated by electro-blown on the one side of the above-substrate; and the second heat-resistant polymer nanofiber laminated by electro-spinning on the above first heat-resistant polymer nanofiber, using electro-blown and electro-spinning.

Here, the above first heat-resistant polymer can be selected from polyamide, polyethylene, and polyethylene terephthalate, whereas the above second heat-resistant polymer, preferably, can be selected from meta-aramid, poly ether surphone, and polyimide.

A detailed description of the cellulose substrate and the heat-resistant polymer is the same as described above.

In addition, the present invention includes methods of production of multi-layered nanofiber filter media using

electro-blown and electro-spinning, which include the step of forming the first heat-resistant polymer nanofiber through spinning, on the cellulose substrate, by electro-blowing the first spinning solution which is produced by dissolving the first heat-resistant polymer into organic solvent; the step of forming the second heat-resistant polymer nanofiber through spinning, on the first heat-resistant polymer nanofiber, by electro-blowing the second spinning solution which is produced by dissolving the second heat-resistant polymer into organic solvent.

Here, it is preferable that the above first heat-resistant polymer be selected from polyamide, polyethylene, and polyethylene terephthalate, whereas the above second heat-resistant polymer, preferably, be selected from meta-aramid, poly ether surphone, and polyimide.

A detailed description of the heat-resistant polymer is the same as described above.

Hereinafter, the detailed description of melt-blown apparatus and electro-spinning device of the present invention follows.

Melt-blown of the present invention is the method of producing synthetic polymer, and the above synthetic can be selected among: polyurethane (PU), polyether urethane, polyurethane copolymer, cellulose acetate, cellulose acetate butyrate, cellulose acetate propionate, polymethyl scalpel acrylate (PMMA), polymethyl acrylate (PMA), polyacrylic copolymer, polyvinyl acetate (PVAc), polyvinyl acetate copolymers, polyvinyl alcohol (PVA), poly-flops furyl alcohol (PPFA), polystyrene (PS), polystyrene copolymer, polyethylene oxide (PEO), polypropylene oxide (PPO), polyethylene oxide copolymer, polypropylene oxide copolymer, polycarbonate (PC), polyvinyl chloride (PVC), polycaprolactone (PCL), polyvinylpyrrolidone (PVP), polyvinylidene fluoride (PVdF), and polyvinylidene fluoride copolymer and polyamide.

The polymer according to the present invention is selected among: polyamide, polyethylene, and terephthalate.

Melt-blown equipment and electro-spinning devices of the present invention is connected to the collector, and subsequently laminates nanofiber.

FIG. 2 schematically shows electro-spinning apparatus.

As shown in FIG. 2, the electro-spinning apparatus(10) of the present invention is structured to include the main tank(not shown) which stores spinning solution, the measuring pump(number not shown) to appropriately supply the spinning solution stored in the above main tank, the nozzle blocks(3) in which multiple pin-structure nozzles(2) are arranged, the collector(4) which is located the downward part of the above nozzles and distanced from the nozzles(2) to collect the polymer spinning solution, the blocks(20) which accommodate voltage-generating device, the case(8) which consists electric conductor or insulator in the blocks(20).

There is one sole main storage tank(not shown) in the present invention, but in case where the spinning solution consists of more than two kinds, it is possible to prepare more than two main storage tanks or to make partition inside the main storage tank and different kinds of spinning solution is stored therein and supplied respectively.

On the other hand, in the present invention polymer solution, like melt-blown, is used for the spinning solution which is supplied through the nozzles(2) of the nozzle blocks(3) in the above block(20).

Here, the present invention uses bottom-up electro-spinning method, in which the above electro-spinning apparatus sprays the solution in the upward direction.

Oh the other hand, in the embodiment of the present invention uses bottom-up electro-spinning apparatus but top-down way can be used, or both bottom-up and top-down methods also can be used altogether.

By the structure described above, the spinning solution which is stored in the main tank is continuously supplied into the multiple nozzles(2) to which high voltage is pressured through metering pump, and the above polymer spinning solution, through the nozzles (2), is spun and collected on the high-voltaged collector(13) and forms nanofiber(not shown), thereby the apparatus produces filter by laminating the formed nanofiber above.

The supply roller, which supplies a long sheet to which nanofiber spun from each block(20) is laminated, is provided on the front side, and winding roller, to take up the sheets on which nanofiber is laminated, is provided on the rear side of the electro-spinning apparatus(10).

The long sheet above is provided to prevent deflection as well as the transferring of the nanofiber, and, in the present invention, cellulose substrates on which heat-resistant polymer nanofiber is laminated is used for the sheets, and nanofiber is formed because polymer spinning solution is sprayed from the above electro-spinning apparatus and laminated on the above substrates.

More specifically, since the electro-blown and electro-spinning devices are connected, the electro-blown nanofiber is laminated on the cellulose substrate and subsequently electrospun nanofiber is laminated.

The cellulose substrate (5) is used in an embodiment of the present invention, but other material such as release paper or non-woven fabric, without limiting to these, also can be used.

That is, one side of the cellulose substrate(5) which is used as a long sheet is taken up by supply roller(11) on the front side of the electro-spinning apparatus(10), and the other side by winding roller(12).

The supply roller(11) is connected to melt-blown apparatus.

Meanwhile, the electro-spinning apparatus of each block is installed in line with towards its proceeding direction(a) in relation to the collectors(4). In addition, auxiliary belts are provided between each collector(4) and the cellulose substrate(5), and, through each auxiliary belt, the cellulose substrate(5) on which nanofiber is laminated is transferred

in the horizontal direction. That is, the auxiliary belts rotate at transport speed(V) of the cellulose substrate, and have a roller(7) to drive the auxiliary belts. Auxiliary belts(7) are at least two automatic rollers whose friction force is extremely low. Since the auxiliary belts are provided between the collector and cellulose substrate(5), cellulose substrate(5) is smoothly transferred without being attracted to the high voltage collector.

By a structure described above, the spinning solution stored in the main tank of the block of the above electro-spinning apparatus(10) is spun on the above cellulose substrate(5) positioned on the collector(4) through the nozzles(2), and by spinning solution sprayed on the above cellulose substrate(5) being collected, nanofiber is laminated and formed. And, by the rotation of the rollers of the auxiliary belts(7), auxiliary belts are operated thereby the above process is repeatedly operated.

On the other hand, as shown in FIG. 4, the nozzle block (3) consists of multiple nozzles(2) positioned in the upward direction from the outlet, pipes(43) in which nozzles(2) are arranged, spinning solution storage tank(44), and spinning solution circulation pipe(45).

First, spinning solution storage tank(44), which is connected to the main tank and stores spinning solution transferred from it, sprays the spinning solution by supplying it to the nozzles(2) through the spinning solution circulation pipe(45) by the measuring pump(not shown). Here, the spinning solution circulation pipe(45) where multiple nozzles(2) are arranged in an array is supplied with the same spinning solution from the spinning solution storage tank(44), but it is also possible that multiple storage tanks of spinning solution are provided, and each of the pipes(43) is supplied with different kinds of spinning solution and sprayed from it.

When sprayed from the outlet of nozzles(2) above, the solutions overflown without being sprayed is stored in the overflow solution storage tank(41). The above overflow solution storage tank(41) is connected to the main storage tank(not shown), and the spinning solution can be reused for spinning.

On the other hand, the main control device(30), as a device which controls the spinning conditions during the overall spinning process, controls the quantity of the spinning solution supplied into the nozzle block(3), the voltage of the voltage generator(1) of each block(20), and transferring speed (V) according to the thickness of the nanofiber and cellulose substrate measured by the thickness measuring device(9).

The thickness measuring device(9) of the present invention is positioned on both the front and rear side of the blocks(20), in a way that the blocks are facing each other and the nanofiber-laminated cellulose substrate(5) is situated inbetween. Because the above thickness measuring device(9) is connected to the main control device(30) which controls the spinning conditions of the electro-spinning apparatus(10), the main control device(30) controls the transferring speed(V) of each block(20), based on the measured value of the thickness of the nanofiber and cellulose substrate. For instance, when the nanofiber's measured positional deviation of thickness is thin in electro-spinning it decreases the transferring speed and controls the thickness. In addition, by increasing the outlet quantity of the nozzle block(3) and controlling the degree of the electric voltage of the voltage generator(1), it is also possible to evenly control the thickness using the above main control device(30).

The above thickness measuring device(9) is equipped with thickness-measuring part which measures, by measuring a pair of longitudinal and transverse wave by using ultrasonic wave, the distance between nanofiber and cellulose substrate(5), and based on this distance, it calculates the thickness of the above nanofiber and cellulose substrate(5). More specifically, by projecting longitudinal and transverse ultrasound wave on the nanofiber-laminated cellulose substrate, measuring each wave's turnaround time, and using a certain formula that includes this value and a temperature constant, it can calculate the subject's thickness.

In the electro-spinning apparatus(10) of the present invention, because it is possible to modify the value of the initial transferring speed(V) if the above positional deviation(P) is above a certain level, or not to modify the value of the initial transferring speed(V) if the above positional deviation is below a certain level, it is possible to simplify the control of transferring speed(V) by the transferring speed(V) controlling device. Other than transferring speed(V), it is also possible to control the strength of voltage and outlet quantity of the nozzle block (3), and therefore, if the above positional deviation is below a certain level the strength of voltage and outlet quantity of the nozzle block(3) is not modified, but if the above positional deviation is above a certain level the strength of voltage and outlet quantity of the nozzle block(3) is then modified, thereby making it possible to simplify the control of the strength of voltage and outlet quantity of the nozzle block(3).

In the present invention each block(20) sprays the same polymer spinning solution, but each block(20) can spray different kind of spinning solution, while it is also possible for a block sprays more than two kinds of spinning solution. In case where each block(20) is supplied and sprays at least two kinds of different spinning solution, it is possible for different kinds of polymer nanofiber to be subsequently laminated.

On the rear side of the electro-spinning apparatus(10) of the present invention, laminating device(19) is equipped. The above laminating device(19) supplies heat and pressure, and through this the nanofiber filter, that is, nanofiber-laminated cellulose substrate, is taken up by winding roller and forms nanofiber.

Here, the above first heat-resistant polymer can be selected from polyamide, polyethylene, and polyethylene terephthalate, whereas the above second heat-resistant polymer, preferably, can be selected from meta-aramid, poly

ether surphone, and polyimide.

Hereinafter, the method for producing multi-layer nanofiber filter media using subsequently the above electro-blown and electro-spinning device is described.

First, the first heat-resistant polymer is dissolved in an organic solvent and the polymer solution is stored in a storage device of the electro-blown spinning solution to the first supply arranged in the spinneret the solution be discharged. The above first spinning solution which is supplied from the spinnin nozzle is then spun by high-pressured heat blower.

The spun melt-blown fiber(the first polymer nanofiber) is transferred to the connected electro-spinning apparatus (10).

The second heat-resistant polymer is dissolved into organic solution, and is supplied into the main storage tank of electro-spinning apparatus(10), and then subsequently supplied into the nozzles(2) of the nozzle blocks(3) which are high-voltaged. The above second spinning solution which is supplied from the above nozzles(2) is collected and focused on the high-voltaged collector(4), and forms the second heat-resistant polymer nanofiber, by being sprayed onto the cellulose substrate to which the first heat-resistant polymer nanofiber is laminated.

Here, the first and the second heat-resistant polymer nanofiber-laminated cellulose substrate is transferred, by the supply roller(11) motivated by a motor(not shown) and the auxiliary belts(6) motivated by the spinning of the above roller(11) into the blocks located in rear side by the spinning of the auxiliary belts(6), and forms nanofiber as the process repeats.

A detailed description of the above cellulose substrate, heat-resistant polymer, and the organic solution is the same as described above.

The emission voltage applied to the electrospinning devices is 1kV or higher, preferably greater than 15kV.

On the other hand, when spinning the heat-resistant polymer, it is most preferred that the temperature is between 30°C and 40°C, inclusive, the humidity between 40 ~ 70%, inclusive, and it depends on the polymer materials.

The diameter of the nanofibers to form a multi-layer filter media in the present invention is preferably from 30 to 2000nm, and more preferably from 50 to 1500 nm.

The following description explains exemplary embodiments in detail. It is to be understood that the invention is not limited to the disclosed embodiments, but, on the contrary, is intended to cover various modifications and equivalent arrangements included within the spirit and scope of the appended claims. Exemplary embodiments introduced herein are provided to make disclosed contents thorough and complete to person of ordinary skill in the art.

Example 1 : Preparation of multi-layer nanofiber filter media using electro blown with electro electrospinning

Electro-blown and electro-spinning dope was prepared by dissolving polyacrylonitrile(Hanil Synthetic) of average weight molecular of 157,000 into dimethylformamide (DMF) in the first and the second phase. Under the condition where the distance between the electrode and the collector of the electro-blown and electro-spinning, respectively, is 40cm, the applied voltage is 15kV, the spinning liquid flow rate is 0.1mL/h, the temperature is 22°C, and the humidity is 22%, we produced multi-layer nanofiber laminated on the cellulose substrate, by, on the cellulose substrate, forming polyacrylonitrile nanofiber whose thickness is 3 $\mu$m, and, during the second phase, by spinning polyacrylonitrile nanofiber, in the thickness of the same 3 $\mu$m, of the same polymer on the polyacrylonitrile on the surface of the substrate as the collector moves at a constant speed.

Example 2 : Preparation of multi-layer nanofiber filter media using electro blown with electro electrospinning

Electro-blown and electro-spinning dope was prepared by dissolving Polyamic Acid(PAA) of average weight molecular of 100,000 into the mixed solution(THF/DMAc) of Tetrahydrofuran (THF) and dimethylacetamide(DMAc) in the first and the second phase. Under the condition where the distance between the electrode and the collector of the electro-blown and electro-spinning, respectively, is 40cm, the applied voltage is 15kV, the spinning liquid flow rate is 0.1mL/h, the temperature is 22°C, and the humidity is 22%, we produced multi-layer nanofiber laminated on the cellulose substrate, by, on the cellulose substrate, forming polyamic acid nanofiber whose thickness is 3 $\mu$m, and, during the second phase, by spinning polyamic acid nanofiber, in the thickness of the same 3 $\mu$m, of the same polymer on the polyamic acid nanofiber laminated on the surface of the substrate as the collector moves at a constant speed, and afterwards imidizing the polyamic acid nanofiber into polyimide nanofiber by heating at 200°C.

Example 3 : Preparation of multi-layer nanofiber filter media using electro blown with electro electrospinning

Electro-blown and electro-spinning dope was prepared by dissolving 100% nylon 6 monomer into the mixed solution of tetrafluoro acetic acid and dichloromethane(DCM) with the weight ratio of 5:5. Under the condition where the distance between the electrode and the collector of the electro-blown and electro-spinning, respectively, is 40cm, the

applied voltage is 15kV, the spinning liquid flow rate is 0.1mL/h, the temperature is 22°C, and the humidity is 22%, we produced multi-layer nanofiber laminated on the cellulose substrate, by, on the cellulose substrate, forming polyamide nanofiber whose thickness is 3 $\mu$m, and, during the second phase, by spinning polyamide nanofiber, in the thickness of the same 3 $\mu$m, of the same polymer on the polyamide on the surface of the substrate as the collector moves at a constant speed.

Example 4 : Preparation of multi-layer nanofiber filter media using electro blown with electro electrospinning

Electric electro-blown spinning dope was prepared by dissolving the polyether having viscosity in the first period and the second period 1,200cps, solid content of 20% by weight in dimethylacetamide set ponreul(Dimethylacetamide, DMAc). The distance between the electro-blown and electrospun to the collector electrode of each of 40 cm, the applied voltage 15kV, the spinning liquid flow rate 0.1mL/h, temperature 22 & lt; 0 & gt; C, humidity of 20% of the thickness in a condition 3 $\mu$m polyethersulfone nanofibers formed on a substrate by emitting the same cellulose polymer, polyether sulfone nanofibers, the surface thickness is polyethersulfone fibers are deposited on the substrate in the nano-second interval to move at a constant speed so that the collector is formed in a nano-fiber layer 3 $\mu$m one, a multi-layer stack of filter media nanofibers on a substrate was prepared.

Example 5 : Preparation of multi-layer nanofiber filter media using electro blown with electro electrospinning

The first section has a weight average molecular weight of manufacturing the electro-blown spinning liquid dissolved in a polyacrylonitrile of 157,000(Hanil Synthetic Fiber) to dimethylformamide (DMF), and the second section 50,000cps viscosity, solid content of 20% by weight of meta-aramid was dissolved in dimethyl acetamide to (Dimethylacetamide, DMAc) to prepare a spinning dope electricity. The distance between the electro-blown and electrospun to the collector electrode of each of 40 cm, the applied voltage 15kV, the spinning liquid flow rate 0.1mL/h, temperature 22 & lt; 0 & gt; C, a thickness of nitrile nanofibers polyacrylonitrile 3 $\mu$m a humidity of 20% in terms the basis weight of the cellulose to form a substrate of 30gsm emitting meta-aramid fiber has a thickness in the nano-sheet with the nitrile polyacrylonitrile nano fiber on the substrate in a collector region 2 is moved in a constant speed are stacked such that the nano-fiber layer 3 $\mu$m been formed, the multi-layer stack of filter media is nanofibers on a substrate was prepared.

Example 6 : Preparation of multi-layer nanofiber filter media using electro blown with electro electrospinning

The first section having a weight average molecular weight of polyacrylonitrile of 157,000 (Hanil Synthetic Fiber) to dimethylformamide (DMF) to prepare a dissolved electro-blown spinning liquid to the second zone has a weight average molecular weight of 100,000 of the polyamic acid (Poly (amic acid), tetrahydrofuran and the PAA) (Tetrahydrofuran, THF) and dimethyl acetamide (Dimethylacetamide, DMAc) of the polyamic acid is dissolved in a mixture electric spinning dope (THF / DMAc) was prepared. The distance between the electro-blown and electrospun to the collector electrode of each of 40 cm, the applied voltage 15kV, the spinning liquid flow rate 0.1mL/h, temperature 22 & lt; 0 & gt; C, a thickness of nitrile nanofibers polyacrylonitrile 3 $\mu$m a humidity of 20% in terms a basis weight of 30gsm to form the cellulose base material and a polyamic acid electrospun nanofiber sheet with a thickness in the nitrile polyacrylonitrile nano fiber on the substrate are stacked in the second section so that the collector is moved in a constant speed 3 $\mu$m nano After the formation of the fiber layer, 200 & lt; 0 & gt; C by the heat in the polyamic acid was imidized to a polyimide nanofibers already nanofibers was produced a multi-layer laminate filter media is nanofibers on the substrate.

Example 7 : Preparation of multi-layer nanofiber filter media using electro blown with electro electrospinning

Producing a first time period has a weight average molecular weight of 157,000 polyacrylonitrile (Hanil Synthetic Fiber) was dissolved in dimethyl formamide (DMF) by electro-blown spinning solution, and in the second section 1,200cps viscosity, solid content of 20% by weight of the polyether sulfone was dissolved in dimethylacetamide (Dimethylacetamide, DMAc) to prepare a spinning dope electricity.The distance between the electro-blown and electrospun to the collector electrode of each of 40 cm, the applied voltage 15kV, the spinning liquid flow rate 0.1mL / h, temperature 22 & lt; 0 & gt; C, a thickness of nitrile nanofibers polyacrylonitrile 3 $\mu$m a humidity of 20% in terms a basis weight of 30gsm to form the cellulose base material, and emitting a polyethersulfone nanofibers to 3 $\mu$m a thickness in the sheet with the nitrile polyacrylonitrile nano fiber on the substrate in a collector region 2 is moved in a constant speed are stacked nano to form a fiber layer, the nanofiber filter media with a multi-layer stack on a substrate was prepared.

Example 8 : Preparation of multi-layer nanofiber filter media using electro blown with electro electrospinning

The first period, the weight ratio of the poly one kind of the amide 100% nylon 6 sheet in acetic homopolymers

tetrafluoroethylene (TFA) and dichloromethane (DCM) 5: electro block producing a peaceful spinning liquid dissolved in a solvent of a 5 and, the second section 50,000cps viscosity, solid content of 20 wt% meta-aramid was dissolved in dimethyl acetamide (Dimethylacetamide, DMAc) to prepare a spinning dope electricity. Is the distance between each electrode and the collector of the electro-blown and electrospun 40 cm, voltage 15kV, the spinning liquid flow rate 0.1mL/h, temperature 22 & lt; 0 & gt; C, humidity of 20% in the thickness of the conditions of the basis weight of the polyamide nanofiber 3 $\mu$m and it is formed on a substrate of cellulose to 30gsm and 3 $\mu$m the thickness to the surface, which is a polyamide nanofibers laminated on the substrate in a collector region 2 is moved in a constant speed spinning a meta-aramid to form a nano-fiber layer nanofiber, It describes a multi-layer laminate of the nanofibers on the filter media were prepared.

Example 9 : Preparation of multi-layer nanofiber filter media using electro blown with electro electrospinning

The first period, the weight ratio of the poly one kind of the amide 100% nylon 6 sheet in acetic homopolymers tetrafluoroethylene (TFA) and dichloromethane (DCM) 5: electro block producing a peaceful spinning liquid dissolved in a solvent of a 5 and a mixed solvent (THF / DMAc) of the second section having a weight average molecular weight of 100,000 of the polyamic acid (Poly (amic acid), PAA) tetrahydrofuran (Tetrahydrofuran, THF) and dimethyl acetamide (Dimethylacetamide, DMAc) dissolving a polyamic acid was prepared in the electrical spinning dope. Is the distance between each electrode and the collector of the electro-blown and electrospun 40 cm, voltage 15kV, the spinning liquid flow rate 0.1mL/h, temperature 22 & lt; 0 & gt; C, humidity of 20% in the thickness of the conditions of the basis weight of the polyamide nanofiber 3 $\mu$m After the formation of the cellulose base material, and spinning the polyamic acid 30gsm nanofibers to polyamide nanofibers 3 $\mu$m thickness on a surface that is laminated on the substrate in a collector region 2 is moved at a constant speed to form a nano-fiber layer , 200 & lt; 0 & gt; C by the heat in the polyamic acid was imidized to a polyimide nanofibers already nanofibers was produced a multi-layer laminate filter media is nanofibers on the substrate.

Example 10 : Preparation of multi-layer nanofiber filter media using electro blown with electro electrospinning

The first period, the weight ratio of the poly one kind of the amide 100% nylon 6 sheet in acetic homopolymers tetrafluoroethylene (TFA) and dichloromethane (DCM) 5: electro block producing a peaceful spinning liquid dissolved in a solvent of a 5 and, the second section 1,200cps viscosity, dissolving the solid content of 20% by weight of the polyether sulfonic ponreul dimethylacetamide (Dimethylacetamide, DMAc) to prepare a spinning dope electricity. Is the distance between each electrode and the collector of the electro-blown and electrospun 40 cm, voltage 15kV, the spinning liquid flow rate 0.1mL/h, temperature 22 & lt; 0 & gt; C, humidity of 20% in the thickness of the conditions of the basis weight of the polyamide nanofiber 3 $\mu$m forming on a substrate of cellulose is 30gsm and emitting a polyethersulfone 3 $\mu$m nanofibers to a thickness in the sheet with the polyamide nanofibers on a substrate, a collector region 2 is moved in a constant speed are stacked to form a nano-fiber layer , the multi-layer stack of filter media nanofibers on a substrate was prepared.

Example 11 : Preparation of multi-layer nanofiber filter media using melt-blown with electro electrospinning

Flow rate of polyethylene in the first period is 7 kg/hr, and the coating weight, and the meltblown fiber melt spinning, so that the thickness of the high-pressure hot air 3 $\mu$m the cellulose base material having a basis weight of 30gsm to the conditions of 50 $g/m^2$, subsequently in the second section 50,000cps viscosity, dissolving the solid content of 20% by weight meta-aramid in dimethylacetamide (Dimethylacetamide, DMAc), a distance between 40 cm and the collector electrode, the applied voltage 15kV, the spinning liquid flow rate 0.1 mL/hr, the temperature 22 & lt; 0 & gt; C, humidity of 20% meta-aramid solution electrospinning conditions such that a thickness of the polyethylene fibers in 3 $\mu$m to form a meta-aramid nanofibers, a multi-layer filter media were prepared.

Example 12 : Preparation of multi-layer nanofiber filter media using melt-blown with electro electrospinning

Flow rate of polyethylene in the first period is 7 kg/hr, and the coating weight, and the meltblown fiber melt spinning, so that the thickness of the high-pressure hot air 3 $\mu$m the cellulose base material having a basis weight of 30gsm to the conditions of 50 $g/m^2$, subsequently in a second period, a weight average molecular weight of 100,000 of the polyamic acid (Poly (amic acid), PAA) tetrahydrofuran (Tetrahydrofuran, THF) and dimethyl acetamide (Dimethylacetamide, DMAc) in a mixed solvent (THF/DMAc) to dissolve to, and a distance between the collector electrode 40 cm, the applied voltage 15kV, the spinning liquid flow rate 0.1mL/hr, temperature 22 & lt; 0 & gt; C, 20% relative humidity conditions, a polyamic acid solution such that radial electrical 3 $\mu$m thickness on polyethylene fiber polyamic acid nano After forming the fibers, in a 200 & lt; 0 & gt; C by heating the polyamic acid for imidation of a polyimide nanofiber was

a nano-fiber multi-layer filter media were prepared.

Example 13 : Preparation of multi-layer nanofiber filter media using melt-blown with electro electrospinning

Flow rate of polyethylene in the first period is 7 kg/hr, and the coating weight, and the meltblown fiber melt spinning, so that the thickness of the high-pressure hot air 3 μm the cellulose base material having a basis weight of 30gsm to the conditions of 50 g/m$^2$, subsequently Viscosity 1,200cps, in the second section, a solid content of 20% by weight of polyether sulfone was dissolved in dimethylacetamide (Dimethylacetamide, DMAc), and the distance between the collector electrode 40 cm, the applied voltage 15kV, the spinning liquid flow rate 0.1 mL/hr, 22 & lt; 0 & gt; C temperature, humidity and thickness of the polyethylene fibers in conditions such that 20% of the polyethersulfone solution 3 μm emission electricity to form the nanofiber laminated, a multi-layer filter media were prepared.

Comparative Example 1

The first section 50,000cps viscosity, solid content of 20 wt.% Of dimethyl-meta-aramid was dissolved in acetamide (Dimethylacetamide, DMAc) meta-aramid dope was prepared. 40 cm and the distance between the collector electrode, the applied voltage 15kV, the spinning liquid flow rate 0.1mL/hr, temperature 22 & lt; 0 & gt; C, the basis weight of the meta-aramid nanofibers 6 μm humidity of 20% in the thickness of the electrospinning conditions are laminated on the cellulose substrate of 30gsm to form a filter media.

Experimental Example 1 : Evaluation of the heat resistance

Examples were each prepared in 13 multi-layer nanofiber filter media and the filter media prepared in Comparative Example 1 at a temperature of 200 & lt; 0 & gt; C line pressure to a 50 kg/cm heat and pressure by measuring the heat shrinkage evaluate the heat resistance, and as a result It is a shown in Table 1 below.

Experimental Example 2 : Determine of filtration efficiency

The DOP test method was used to determine the filtration efficiency of the filter media prepared in each of the multi-layer nanofiber filter media prepared in Comparative Example 1 in Examples 1 to 13, and the results are shown in Table 1 below.

At this time, DOP test method TS children of copper federated (TSI Incorporated) of TSI 3160 of the automated filter analyzer (AFT) with dioctyl phthalate (DOP) effective measures to as a filter media material of ventilation, the filter efficiency, pressure differential and It was able to measure, for the particle diameter was set to 0.35um.

The automated analyzer is made to the desired size of the transmission filter, the DOP particles on the sheet to the speed of the air, DOP filtration efficiency, air permeability (breathability) and automatic measuring device as a factor method is a very important instrument in the high efficiency filter.

DOP filtration efficiency (%) is defined as follows:

DOP transmittance (%) = 100 (DOP concentration downstream / DOP concentration upstream)

**[Table 1]**

| | Thermal Shrinking Ratio (%) | 0.35um DOP (%) |
|---|---|---|
| Example 1 | 3.0 | 97 |
| Example 2 | 2.9 | 98 |
| Example 3 | 3.1 | 98 |
| Example 4 | 3.0 | 98 |
| Example 5 | 3.0 | 98 |
| Example 6 | 3.1 | 98 |
| Example 7 | 3.0 | 97 |

(continued)

| | Thermal Shrinking Ratio (%) | 0.35um DOP (%) |
|---|---|---|
| Example 8 | 3.0 | 98 |
| Example 9 | 2.9 | 98 |
| Example 10 | 3.0 | 97 |
| Example 11 | 3.3 | 98 |
| Example 12 | 3.2 | 98 |
| Example 13 | 3.3 | 98 |
| Comparative Example 1 | 5.0 | 85 |

As shown in Table 1, both the multi-layer nanofiber filter media using electro-blown and electro-spinning (Examples 1 - 10) and the multi-layer nanofiber filter media using meltblown and electro-spinning (Examples 11 -13) showed, compared to filter media using electro-spinning only (Comparative Example 1), better heat-resistant ability and filtering efficiency.

## Claims

**1.** A multi-layer nanofiber filter media for improved heat-resisting property using electro-blown and electro-spinning, comprising:

a substrate;
a first hear resistant polymer nanofiber laminated on the above substrate; and
a second heat-resistant nanofiber laminated on the surface of the above first heat-resistant polymer nanofiber.

**2.** A multi-layer nanofiber filter media for improved heat-resisting property of Claim 1, wherein the first heat-resistant polymer above and the second heat-resistant polymer above is equal to each other, each of which is any one selected from the group consisting of polyacrylonitrile, meta-aramid, and poly ether surphone, independently.

**3.** A multi-layer nanofiber filter media for improved heat-resisting property of Claim 1, wherein the first heat-resistant polymer can be polyamide or polyacrylonitrile, while the second heat-resistant polymer is any one selected from the group consisting of meta-aramid, poly ether surphone, and poly imide.

**4.** A multi-layer nanofiber filter media for improved heat-resisting property using electro-blown and electro-spinning, comprising:

a substrate;
a first hear resistant polymer nanofiber laminated on the above substrate; and
a second heat-resistant nanofiber laminated on the surface of the above first heat-resistant polymer nanofiber.

**5.** A multi-layer nanofiber filter media for improved heat-resisting property of Claim 4, wherein the above first heat-resistant polymer is any one selected from polyamide, polyethylene, and polyethylene terephthalate, whereas the above second heat-resistant polymer, preferably, is any one selected from meta-aramid, poly ether surphone, and polyimide.

**6.** A manufacturing method of multi-layer nanofiber filter media using electro-blown and electro-spinning, comprising:

forming first heat-resistant polymer nanofiber through spinning, on the cellulose substrate, by electro-blowing the first spinning solution which is produced by dissolving the first heat-resistant polymer into organic solvent; and
forming second heat-resistant polymer nanofiber through spinning, on the first heat-resistant polymer nanofiber, by electro-blowing the second spinning solution which is produced by dissolving the second heat-resistant polymer into organic solvent.

7. A manufacturing method of Claim 6, wherein the first heat-resistant polymer and the second heat-resistant polymer can be equal to each other, each of which is any one selected from the group consisting of polyacrylonitrile, meta-aramid, and poly ether surphone, independently.

8. A manufacturing method of Claim 6, wherein the first heat-resistant polymer can be polyamide or polyacrylonitrile; and the second heat-resistant polymer is any one selected from the group consisting of meta-aramid, poly ether surphone, and poly imide.

9. A manufacturing method of Claim 6, wherein devices of the electro-blown and electro-spinning are connected continuously.

10. A manufacturing method of Claim 6, wherein the electro-spinning is carried out by using a bottom-up electro-spinning process.

11. A manufacturing method of multi-layer nanofiber filter media using melt-blown and electro-spinning, comprising:

forming first heat-resistant polymer nanofiber through spinning, on the cellulose substrate, by melt-blowing the first spinning solution which is produced by dissolving the first heat-resistant polymer into organic solvent; and second heat-resistant polymer nanofiber is formed through spinning, on the first heat-resistant polymer nanofiber, by melt-blowing the second spinning solution which is produced by dissolving the second heat-resistant polymer into organic solvent.

12. A manufacturing method of Claim 11, wherein the above first heat-resistant polymer can be selected from polyamide, polyethylene, and polyethylene terephthalate; and the above second heat-resistant polymer, preferably, is any one selected from meta-aramid, poly ether surphone, and polyimide.

13. A manufacturing method of Claim 11, wherein devices of the melt-blown and electro-spinning are connected continuously.

14. A manufacturing method of Claim 11, wherein the electro-spinning is carried out by using a bottom-up electro-spinning process.

[Fig. 1]

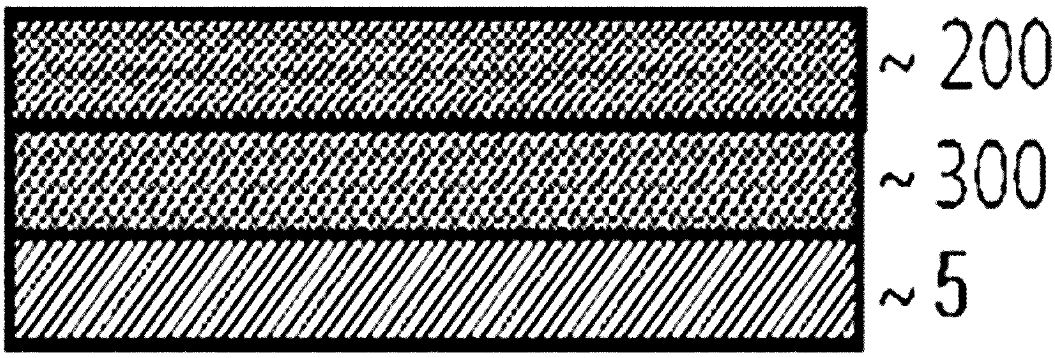


[Fig. 2]

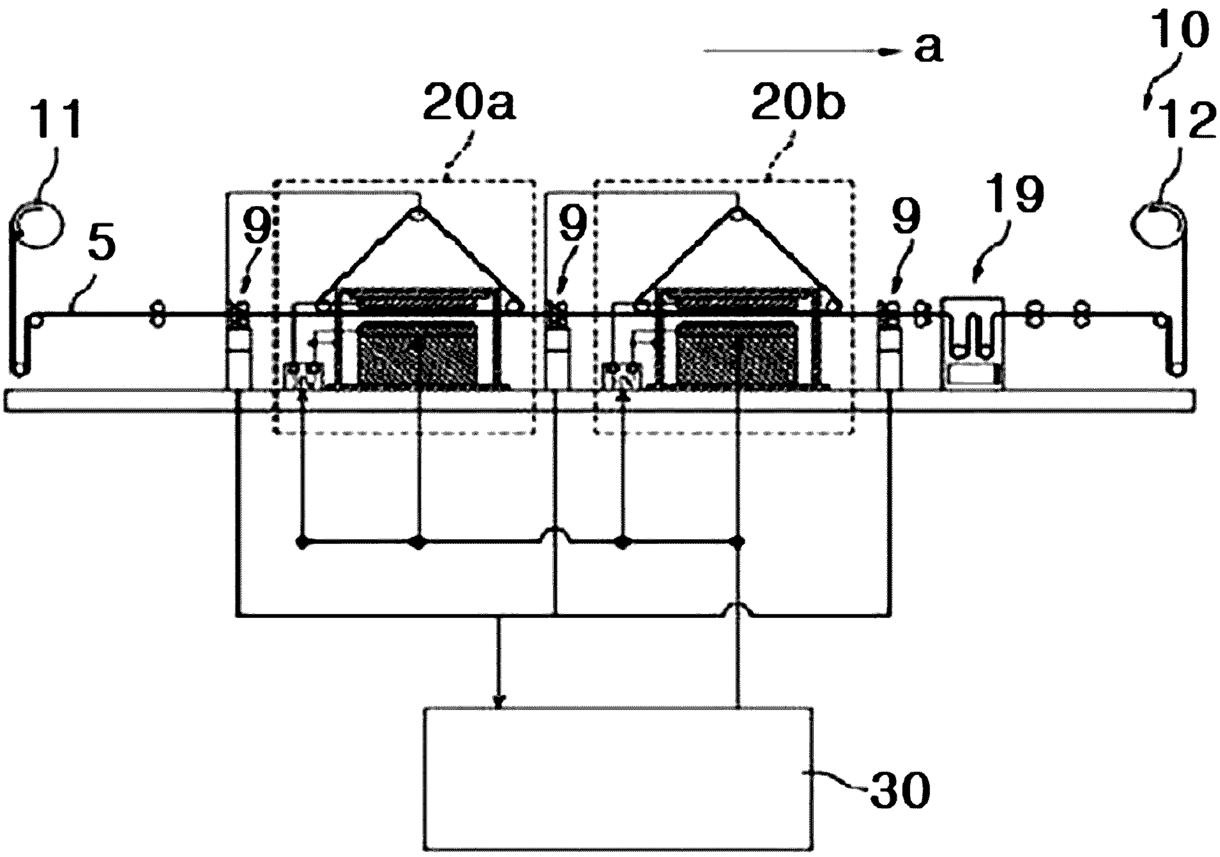

[Fig. 3]

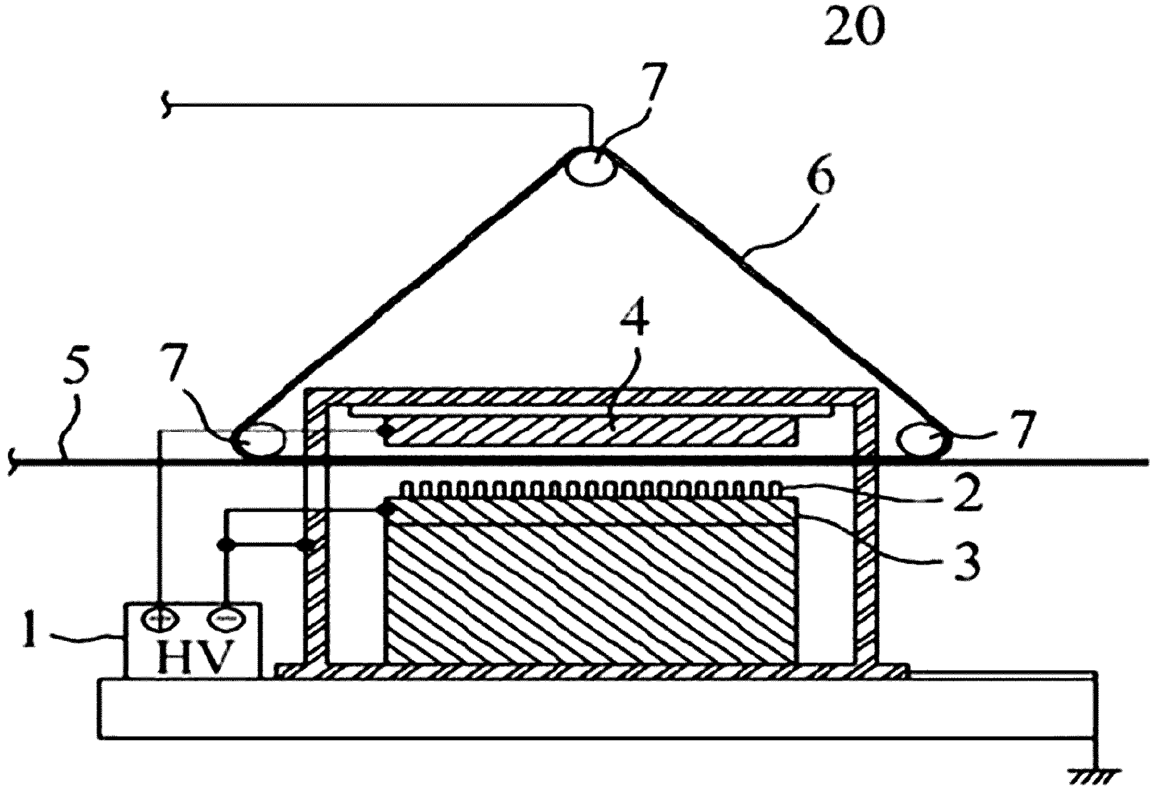

[Fig. 4]

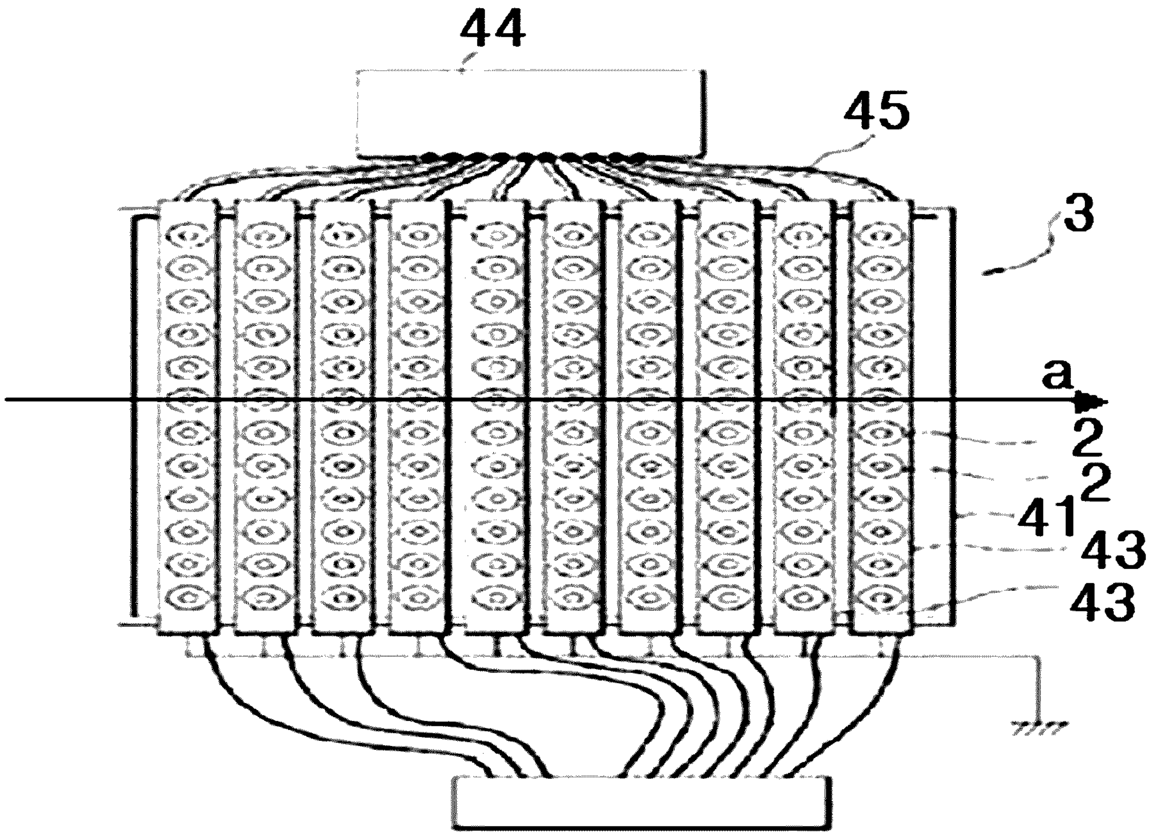

## INTERNATIONAL SEARCH REPORT

International application No.

**PCT/KR2014/001571**

A. CLASSIFICATION OF SUBJECT MATTER

***D04H 1/728(2012.01)i, D04H 1/4374(2012.01)i, B01D 39/02(2006.01)i***

According to International Patent Classification (IPC) or to both national classification and IPC

B. FIELDS SEARCHED

Minimum documentation searched (classification system followed by classification symbols)

D04H 1/728; B32B 5/26; D04H 1/46; B01D 39/16; B01D 39/00; B01D 27/06; B01D 29/07; B01D 46/00; D04H 1/4374; B01D 39/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: electro-blown, meltblown, electro-spinning, cellulose, heat resistant polymer, filter, lamination

C. DOCUMENTS CONSIDERED TO BE RELEVANT

| Category* | Citation of document, with indication, where appropriate, of the relevant passages | Relevant to claim No. |
|---|---|---|
| A | KR 10-2011-0131666 A (SOONGSIL UNIVERSITY RESEARCH CONSORTIUM TECHNO-PARK) 07 December 2011<br>See abstract; and claims 1-3. | 1-14 |
| A | US 8172092 B2 (GREEN, T. B. et al.) 08 May 2012<br>See abstract; claims 7-11, 19-21; and figure 10. | 1-14 |
| A | KR 10-2007-0104370 A (E.I. DU PONT DE NEMOURS AND COMPANY) 25 October 2007<br>See abstract; and claims 1-22. | 1-14 |
| A | US 5427597 A (OSENDORF, R. J.) 27 June 1995<br>See abstract; and claims 1-2. | 1-14 |
| A | US 2012-0240369 A1 (CAPPARELLI MATTOSO, L. H. et al.) 27 September 2012<br>See abstract. | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 JUNE 2014 (13.06.2014) | **16 JUNE 2014 (16.06.2014)** |

Name and mailing address of the ISA/**KR**
Korean Intellectual Property Office
Government Complex-Daejeon, 189 Seonsa-ro, Daejeon 302-701, Republic of Korea
Facsimile No. 82-42-472-7140

Authorized officer

Telephone No.

Form PCT/ISA/210 (second sheet) (July 2009)

INTERNATIONAL SEARCH REPORT
Information on patent family members

International application No.
PCT/KR2014/001571

| Patent document cited in search report | Publication date | Patent family member | Publication date |
|---|---|---|---|
| KR 10-2011-0131666 A | 07/12/2011 | NONE | |
| US 8172092 B2 | 08/05/2012 | US 2010-181249 A1 | 22/07/2010 |
| KR 10-2007-0104370 A | 25/10/2007 | CN 101132906 A | 27/02/2008 |
| | | CN 101132907 A | 27/02/2008 |
| | | EP 1848582 A1 | 31/10/2007 |
| | | EP 1848582 B1 | 01/05/2013 |
| | | EP 1851046 A1 | 07/11/2007 |
| | | JP 04871883 B2 | 08/02/2012 |
| | | JP 2008-525195 A | 17/07/2008 |
| | | JP 2008-525671 A | 17/07/2008 |
| | | KR 10-1315000 B1 | 04/10/2013 |
| | | WO 2006-071979 A1 | 06/07/2006 |
| | | WO 2006-071980 A1 | 06/07/2006 |
| US 05427597 A | 27/06/1995 | US 05306321 A | 26/04/1994 |
| US 2012-0240369 A1 | 27/09/2012 | BR PI0903844 A2 | 01/03/2011 |
| | | WO 2010-144980 A1 | 23/12/2010 |

Form PCT/ISA/210 (patent family annex) (July 2009)